# EUROPEAN PATENT APPLICATION

(11) **EP 2 228 198 A1**
(43) Date of publication of application: **15.09.2010**
(21) Application number: 09160515.4
(22) Date of filing: 18.05.2009
(51) Int. Cl.: B29C 70/30

(54) **A method of strengthening a wind turbine blade and the strengthened blade**

(71) Applicant: LM GLASFIBER A/S, 6000 Kolding (DK)
(72) Inventor: Günther, Sabine, 6600 Vejen (DK); Bach, Allan, 5474 Veflinge (DK); Malaschewski, Markus, 24980 Schafflund (DE); Rasmussen, Mads Bergmann, 6700 Esbjerg (DK)
(74) Representative: Kitchen, Steven Richard

(57) **Abstract**

A method of strengthening a wind turbine blade (2) is described. The blade (2) comprises a shell body comprising a fibre-reinforced polymer material. The blade (2) is strengthened by use of a UV curable prepreg material (250) having a first side (337) and a second side (339). The method comprises the steps of: a) applying the UV curable, fibre-reinforced prepreg material (250) to an area of application on an outer surface or an inner surface of the wind turbine blade (2) with the first side (337) of the prepreg material (250) facing the area of application, and b) exposing the prepreg material to UV radiation for a predetermined amount of time so as to allow the prepreg to cure.

## Description

The present invention relates to a method of strengthening a wind turbine blade comprising a shell body comprising a fibre-reinforced polymer material.

Vacuum infusion or VARTM is a process used for moulding fibre composite mouldings, where uniformly distributed fibres are layered in one of the mould parts, the fibres being rovings, i.e. bundles of fibre bands, bands of rovings, or mats, which are either felt mats made of individual fibres or woven mats made of fibre rovings. The second mould part is often made of a resilient vacuum bag, and is subsequently placed on top of the fibre material. By generating a vacuum, typically 80% to 95% of the total vacuum, in the mould cavity between the inner side of the mould part and the vacuum bag, the liquid polymer can be drawn in and fill the mould cavity with the fibre material contained herein. So-called distribution layers or distribution tubes, also called inlet channels, are used between the vacuum bag and the fibre material in order to obtain as sound and efficient a distribution of polymer as possible. In most cases, the polymer applied is polyester or epoxy, and the fibre reinforcement is most often based on glass fibres or carbon fibres.

During the process of filling the mould, a vacuum, which in this connection is to be understood as an under-pressure or negative pressure, is generated via vacuum outlets in the mould cavity, whereby liquid polymer is drawn into the mould cavity via the inlet channels in order to fill said mould cavity. From the inlet channels, the polymer disperses in all directions in the mould cavity due to the negative pressure as a flow front moves towards the vacuum channels. Thus, it is important to position the inlet channels and vacuum channels optimally in order to obtain a complete filling of the mould cavity. Ensuring a complete distribution of the polymer in the entire mould cavity is, however, often difficult, and accordingly this often results in so-called dry spots, i.e. areas with fibre material not being sufficiently impregnated with resin. Dry spots are thus areas where the fibre material is not impregnated, and where there can be air pockets, which are difficult or impossible to remove by controlling the vacuum pressure and possibly an overpressure at the inlet side. In connection with vacuum infusion, employing a rigid mould part and a resilient mould part in the form of a vacuum bag, the dry spots can be repaired after the process of filling the mould by for example puncturing the bag in the respective locations and by drawing out air for example by means of a syringe needle. Liquid polymer can optionally be injected in the respective locations, and this can for example be done by means of a syringe needle as well. This is a time-consuming and tiresome process.

Prepreg moulding is a method in which reinforcement fibres are pre-impregnated with a pre-catalysed resin. The resin is typically solid or near-solid at room temperature. The prepregs are arranged by hand or machine onto a mould surface, vacuum bagged and then heated to a temperature, where the resin is allowed to reflow and eventually cured. This method has the main advantage that the resin content in the fibre material is accurately set beforehand. The prepregs are easy and clean to work with and make automation and labour saving feasible. The disadvantage with prepregs is that the material cost is higher than for non-impregnated fibres. Further, the core needs to be made of a material, which is able to withstand the process temperatures needed for bringing the resin to reflow. Prepreg moulding may be used both in connection with an RTM and a VARTM process.

Wind turbine blades of fibre-reinforced polymer are usually manufactured in moulds, where an upper side and a lower side of the blade profile, e.g. the suction side and pressure side of the blade, are manufactured separately by arranging glass fibre mats in each of two mould parts via for instance the afore-mentioned RTM or VARTM method. Then, the two halves are glued together, often by means of internal flange parts at the leading edge and trailing edge of the blade. Glue is applied to the inner face of the lower blade half before the upper blade half is lowered thereon. Additionally, one or two reinforcing profiles (beams) are often attached to the inside of the lower blade half prior to gluing to the upper blade half. Afterwards, the connection parts need to be sanded, polished and cleaned, and in some situations it may be necessary to apply additional fibre-reinforcement material at the leading edge and/or the trailing edge of the blade. Typically, such additional fibre-reinforcement material is applied as a heat curing prepreg and layed up by hand and cured afterwards by use of a heat source.

A similar technique is used, when wind turbine blades already in use for some reason need repair. The wind turbine blades are built to last for at least a predetermined number of years, e.g. 20 years. However, wind turbines often remain in operation far beyond this period, and over time cracks or similar local deviations may begin to appear in the laminate structure of the wind turbines, especially at the leading edge of the blade. However, especially when repairing blades installed on a wind turbine, it is difficult to ensure that the heating has been applied correctly and that the resin has sufficiently cured. Furthermore, such prepregs can only be applied in ambient temperatures of above approximately 16 degrees Celsius. Most wind turbines in operation are installed in the northern hemisphere in regions, where such repairs typically only can be carried out between May and October.

It is an object of the invention to obtain a new method of strengthening a wind turbine blade, and which overcomes or ameliorates at least one of the disadvantages of the prior art or which provides a useful alternative.

According to an aspect of the invention, this is obtained by use of a UV curable, fibre-reinforced prepreg material having a first side and a second side, and where the method comprises the steps of: a) applying the UV curable, fibre-reinforced prepreg material to an area of application on an outer surface or an inner surface of the wind turbine blade with the first side of the prepreg material facing the area of application, and b) exposing the prepreg material to UV radiation for a predetermined amount of time so as to allow the prepreg to cure.

Thus, the prepreg is used for providing a reinforcement element on the surface of the shell body, either on the outer surface of the shell body or on the inner surface of the shell body. UV curable prepregs are typically not applicable to the manufacture of wind turbine blades, since the blades comprise a laminate structure having a thickness that does not allow the UV radiation to penetrate deeply enough for the entire laminate structure to cure. However, applying the UV curable prepreg material afterwards to the outer surface or the inner surface of the wind turbine blades is possible, since the material is only applied as a comparatively thin layer. In addition, UV curable prepregs are much simpler and safer to handle than heat curing prepregs. Thus, there is a reduced probability of adhesion failure due to mixing and over or under catalysing. Only UV light is needed in order to cure the prepreg - the more radiation, the faster the curing, at least up to a certain limit.

Furthermore, it is ensured that the prepregs are sufficiently cured after application to the surface of the wind turbine blade, since the UV content of sunlight is sufficient for the resin to obtain gelling and subsequent curing. Normally, 15 minutes of exposure to sunlight will be sufficient for the curing, and even in cloudy weather, the prepreg will be fully cured within one our. Nonetheless, the UV curable prepreg material can stay workable, when working in environments with only incandescent light, such as in a factory hall. If the prepreg is applied to the inner surface of the shell body, a UV lamp should be used for exposing the prepreg material to UV radiation.

Additionally, the UV curable prepreg material can be used in temperatures ranging from -20 degrees Celsius to approximately 60 degrees Celsius. Thus, such prepreg does not have to be stored at certain temperatures. Also, the temperature does not influence the curing time of the prepreg. This makes this type of prepregs especially applicable to repairing wind turbine blades already installed on the rotor of a wind turbine. Due to the large temperature range, the repairs can be carried out all year round. The repair via UV curable prepreg material has a further advantage over conventional repair methods in that no liquid resin is needed, and many prepreg materials are odourless. Thus, no mask is needed for filtering styrene gas or other harmful vapours. However, in some circumstances it may be necessary to apply a primer also.

According to an advantageous embodiment, the second side of the prepreg material is covered by a removable, UV blocking film, and wherein the UV blocking film is removed prior to step b). The UV blocking film ensures that the prepreg does not start gelling and curing prior to being applied to the surface of the wind turbine blade. After removal of the UV blocking film, the prepreg is exposed to UV radiation, e.g. via a UV lamp. The UV blocking film may for instance comprise carbon black.

The prepreg material may in addition be covered by a second film on the first side of the prepreg material.

According to another advantageous embodiment, the area of application is prepared for adhesion prior to step a). Thereby, it is ensured that the sticky prepreg can adhere sufficiently to the surface of the wind turbine blade. The area of application may for instance be grinded, polished, sanded or the like, and preferably cleaned afterwards.

The shell body made of the composite material is often manufactured via two separate shell parts, e.g. the pressure side and suction side of the blade. The shell parts may for instance be manufactured via vacuum assisted resin transfer moulding (VARTM). After manufacture of the two shell parts, the two shell parts are adhered to each other, optionally via glue flanges. Thus according to an advantageous embodiment, the UV curable prepreg material is applied at joint faces in the shell body. Thus, the prepreg material is typically applied at the leading edge or the trailing edge of the blade. The prepreg material can for instance be used to seal or reinforce bond lines.

Typically, the wind turbine blade is manufactured as a shell member of fibre-reinforced polymer, such as glass fibres, carbon fibres, plastic fibres or plant fibres impregnated with epoxy, polyester or vinylester, optionally with a core material, such as foamed polymer or balsawood.

According to another advantageous embodiment, the UV curable prepreg material is preformed, e.g. by vacuum forming, thermoforming or deep drawing, so as to fit to the area of application of the wind turbine blade. Thus, the prepreg can be custom made to fit the particular wind turbine blade. The UV curable prepreg material may for instance be formed so as to constitute a leading edge reinforcement element.

According to yet another advantageous embodiment, the UV curable prepreg material is applied from a roll. Thus, the prepreg may be rolled onto the surface of the wind turbine blade as a thin strip of material. The UV curable prepreg material may for instance be applied by use of a roll dispenser. Thereby, a particularly simple method of applying the prepreg material to the surface of the wind turbine blade is obtained.

In one embodiment, the UV curable prepreg is applied as a strip or strips on the surface of the wind turbine blade, the strips having a width in an interval of 2 cm to 20 cm, or 3 cm to 18 cm. Typically, a width of 60, 90 or 120 mm is used. In another embodiment, the UV curable prepreg is applied as a strip or strips on the surface of the wind turbine blade, the strips having a thickness in an interval of 1 mm to 4 cm, or 1 mm to 3 cm, or 1 mm to 2 cm. A single prepreg layer is typically approximately 1 mm thick. When using such thicknesses, it is ensured that the UV radiation can penetrate deeply enough into the prepreg material, and a couple of minutes exposure to UV radiation from a UV light is sufficient for curing.

According to an advantageous embodiment, the UV curable prepreg comprises a number of stacked layers with the width of the layers increasing from the first side to the second side. Thus, each layer, when applied with the first side to the surface of the wind turbine blade, will adhere sealingly to the surface of the wind turbine blade, and a smooth transition from the strengthening prepreg to the laminate structure of the wind turbine blade is achieved.

The UV curable prepreg material may comprise carbon fibres, plant fibres or metal fibres. However, according to an advantageous embodiment, the UV curable prepreg comprises glass fibres, which are most practical, since UV radiation is capable of penetrating into for instance 2 cm of glass fibres. It is clear that the resin should also be substantially transparent to UV light.

According to one embodiment, the prepreg comprises a photo initiator absorbing light within a wavelength range from 250 nm to 425 nm. The photo initiator may for instance comprise a photo initiator absorbing light having a wavelength approximately 254 nm or 365 nm, if a mercury arc lamp is used for UV radiation. Photo initiators absorbing light with a wavelength of approximately 385 nm or 417 nm are also a possibility, for instance if using a metal halide lamp for UV radiation. Yet again, photo initiators absorbing light with a wavelength of approximately 395 nm is also a possibility, for instance if using a LED lamp.

According to another aspect, the invention comprises a method of repairing a wind turbine blade according to any of the afore-mentioned methods. When repairing a wind turbine blade, it is necessary to prepare the area of application before applying the prepreg.

Cracks, brittleness, or similar local weakening of the blade typically occur at the leading edge of the blade. Thus, according to a particularly advantageous method, the UV curable prepreg is applied to the leading edge of the blade. The leading edge may need to be prepared for adhesion, typically via sanding and subsequent cleaning. Furthermore, it may be advantageous to apply a primer.

According to one method, the wind turbine blade is installed on the rotor of a wind turbine blade, and wherein the blade is positioned in a substantially vertical position with a tip end pointed towards ground, and wherein a worker is hoisting down along the wind turbine blade from a point above the area of application. Thus, the wind turbine blade can be repaired without having to dismount the blade from the wind turbine. All materials and tools for the repair can be carried by the work platform. Typically, the worker is hoisting down along the blade via a work platform, such as a suspended chair, which can be hoisted upwards or downwards along the wind turbine blade. The working station is typically hoisted down from an area near the root end of the blade, e.g. from the hub of the wind turbine. The position of the work platform may be controlled by the worker from the platform. Alternatively, it may be controlled from a point of anchoring by another worker. The rotor is stopped during repair, and the blade may be pitched to a break position.

If the leading edge of the blade is to be repaired, the worker will typically guide the platform down along the leading edge of the blade. Guiding arms attached to the platform may be used for pressing against the pressure side and the suction side of the blade so as to hold the platform steady near the leading edge of the blade. A similar technique can of course be used, if the trailing edge of the blade is to be repaired.

Advantageously, the prepreg material is flexible or workable before curing so that the prepreg material can fit to the surface of the wind turbine blade. Typically, the prepreg material will have a leathery and sticky texture.

According to an advantageous embodiment, step b) is carried out by use of a portable UV radiation source. The UV radiation source may for instance be a xenon lamp, a mercury arc lamp, a metal halide lamp, or a LED lamp. UV protective goggles and specially suited gloves should be used by a worker, when using such UV radiating lamps.

According to yet another aspect, the invention provides a blade comprising a shell body comprising a fibre-reinforced polymer material and having an outer surface, the shell body further being provided with a reinforcement element on the outer surface of the blade, the reinforcement element comprising a UV cured prepreg.

The invention is explained in detail below with reference to embodiments shown in the drawings, in which
Fig. 1 shows a wind turbine,
Fig. 2 shows a cross section of a wind turbine blade with prepreg reinforcement elements applied to the surface,
Fig. 3 shows a cross section of a wind turbine blade with prepreg reinforcement elements applied to the surface,
Fig. 4 shows the cross section of a first embodiment of a UV curable prepreg material,
Fig. 5 shows the cross section of a second embodiment of a UV curable prepreg material,
Fig. 6 shows a dispenser for applying a UV curable prepreg material to an outer surface of a wind turbine blade, seen in perspective, and
Fig. 7 shows a wind turbine blade under repair.

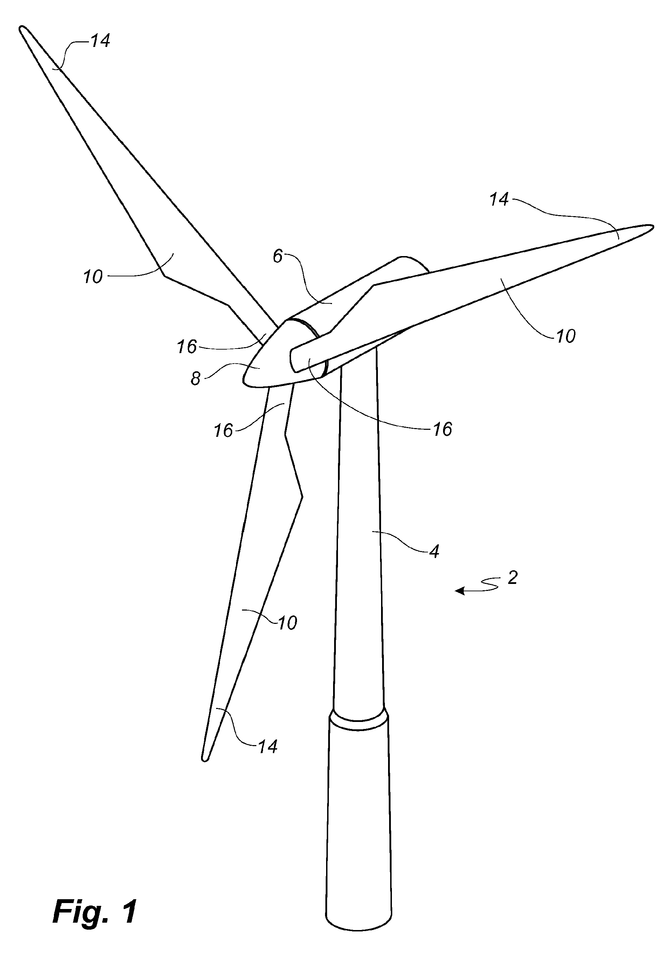

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

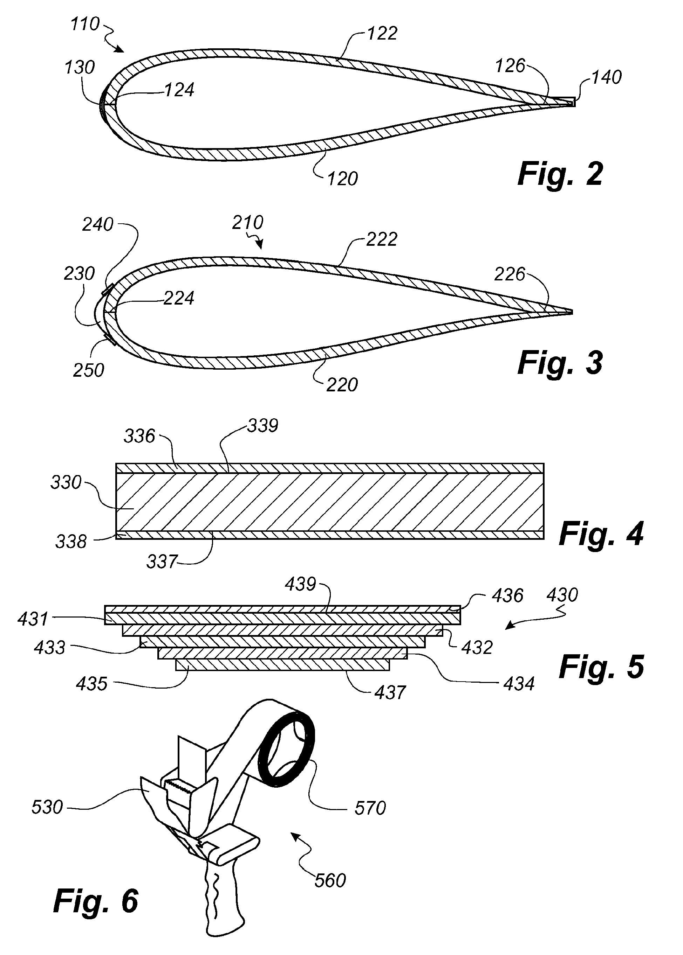

Fig. 2 shows a cross section of a wind turbine blade 110. The wind turbine blade comprises a shell body, which is made of a first shell part 120 constituting the pressure side of the wind turbine blade 112 and a second shell part 122 constituting the suction side of the wind turbine blade. The first shell part 120 and the second shell part 122 are adhered to each other near the leading edge of the blade at a first joint face 124 and near the trailing edge of the blade at a second joint face 126.

A number of layers of a first UV curable prepreg material 130 is arranged near the leading edge on the outer surface of the wind turbine blade 110 in such a way that the prepreg material 130 seals to the outer surface across the first joint face 124. Similarly a second UV curable prepreg material 140 is arranged near the trailing edge on the outer surface of the wind turbine blade 110 in such a way that the prepreg material 140 seals to the outer surface across the second joint face 126.

The areas of application are prepared by sanding and cleaning prior to applying the first prepreg material 130 and the second prepreg material 140. After application of the prepreg materials 130, 140, the prepregs are exposed to UV radiation from a UV lamp or normal sunlight in order to obtain gelling and subsequent curing of the resin in the prepregs.

Fig. 3 shows a cross section of another wind turbine blade 210. As with the embodiment shown in Fig. 2, the wind turbine blade 210 comprises a shell body, which is made of a first shell part 220 constituting the pressure side of the wind turbine blade 210 and a second shell part 222 constituting the suction side of the wind turbine blade 210. The first shell part 220 and the second shell part 222 are adhered to each other near the leading edge of the blade at a first joint face 224 and near the trailing edge of the blade at a second joint face 226.

A reinforcement element 230 in form of a preformed UV curable prepreg material is fitted to the leading edge of the blade, thus covering the first joint face 224. The reinforcement element 230 may be formed by use of vacuum forming, thermoforming or deep drawing. Additional layers of UV curable prepreg material 240, 250 may be applied to the surface of the blade in order to seal the joint face between the reinforcement element 230 and the outer surface of the blade.

As with the first embodiment, the areas of application are prepared by sanding and cleaning prior to applying the first prepreg material 230 and the additional layers of prepreg material 240, 250. Afterwards, the prepregs 230, 240, 250 are exposed to UV radiation from a UV lamp or normal sunlight in order to obtain gelling and subsequent curing of the resin in the prepregs.

The UV curable prepregs are often formed as a strip, especially when used for repair or sealing purposes. Fig. 4 shows a cross section through such a prepreg strip. The prepreg strip comprises a prepreg material 330 having a first side 337 and a second side 339. The second side is covered by a UV protective film 336, for instance comprising carbon black. The UV protective film 336 ensures that the prepreg material 330 does not start curing prior to application to the outer surface of the wind turbine blade. The first side may optionally be covered by a second film 338, which may be used to ensure that the prepreg material 330 does not stick to other items before application to the outer surface. Prior to application, the second film 338 is removed from the first side 337 of the prepreg strip, and the prepreg material 330 is applied to the outer surface of the wind turbine at an area of application. After application of the prepreg material 330, the UV protective film 336 is removed from the second side 339 of the film and the prepreg material is exposed to UV radiation.

The prepreg material comprises a fibre-reinforced polymer material or resin. The prepreg material further comprises a photo initiator absorbing light in the UV range or near-UV range, which upon radiation to UV light initiates gelling and subsequent curing of the resin. Prior to curing, the prepreg material has a leathery and sticky substance, which makes it advantageous for sealing and repairing purposes, since the prepreg material is flexible and can be worked to fit exactly to the outer surface of the wind turbine blade.

Fig. 5 shows another example of a prepreg strip for use in the method according to the invention. The prepreg strip comprises a UV curable prepreg material 430 having a first side 437 and a second side 439 and comprising a number of prepreg layers 431-435. The second side 439 is covered by a UV protective film 436. After application of the prepreg material 430 to the outer surface a wind turbine blade, the UV protective film 436 is removed from the second side 439 of the film and the prepreg material is exposed to UV radiation. In this embodiment, the widths of the individual prepreg layers 431-435 are increasing from the first side 437 to the second side 439 of the prepreg material 430. Thus, each prepreg layer 431-435, when applied with the first side 437 to the surface of a wind turbine blade, will adhere sealingly to the surface of the wind turbine blade, and a smooth transition from the prepreg material 430 to the laminate structure of the wind turbine blade is achieved.

Fig. 6 shows a dispenser 560, which can be used to apply a UV curable prepreg material 530 to an outer surface of a wind turbine blade. The UV curable prepreg material 530 is applied to the surface of the wind turbine blade via the dispenser 560 from a roll 570. The UV curable prepreg material can also be applied to the inner surface of the wind turbine blade (not shown).

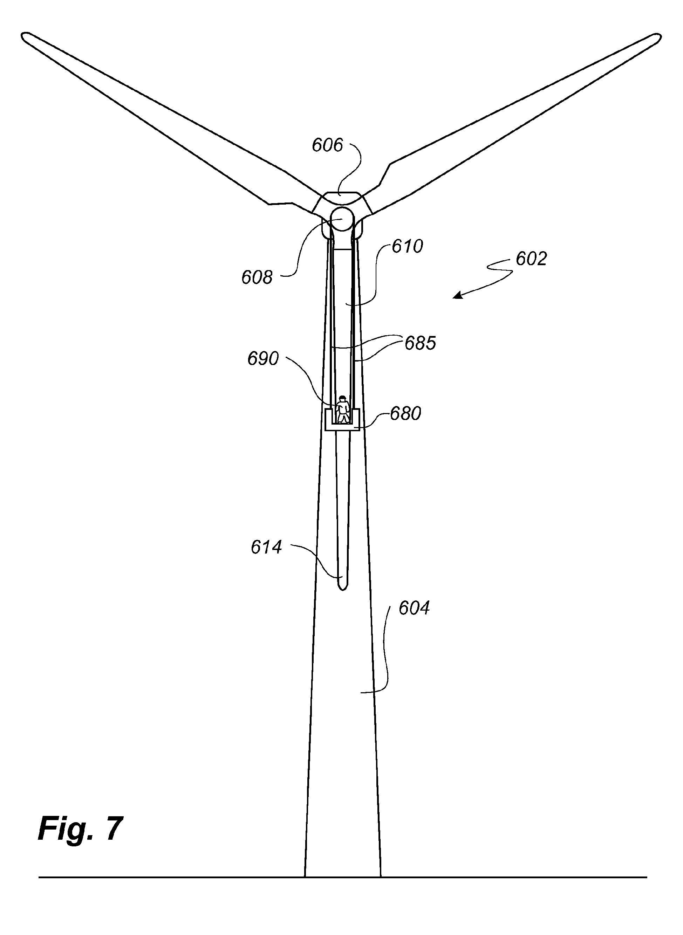

Fig. 7 illustrates a wind turbine 602 comprising a tower 604, a nacelle 606 and a rotor with a substantially horizontal rotor shaft. The rotor includes a hub 608 and three blades 610 extending radially from the hub 608. The rotor is stopped in a position, where one of the blades 610 is positioned substantially vertical with a tip end 614 pointing towards ground. Furthermore, the wind turbine blade 610 is pitched to a break position. A worker 680 is working on the wind turbine blade 610 and is hoisting down along the trailing edge of the blade 610 via a work platform 690 and a hoisting arrangement 685. The hoisting arrangement 685 comprises wires, which are connected (not shown) near the root of the wind turbine blade 610, e.g. to the hub 608 of the wind turbine 602.

The worker starts preparing the area of application by sanding the area and cleaning it afterwards so that the UV curable prepreg material can adhere sufficiently to the area. Furthermore, it may be advantageous to apply a primer in order to obtain the most efficient laminate connection. All materials for preparing the area of application as well as the dispenser for applying the prepreg material can be carried by the work platform 690. The position of the work platform 690 may be controlled by the worker 680 from the work platform, alternatively by a second worker from above the work platform 690. After application of the UV curable prepreg material, the prepreg material is exposed to UV radiation from a portable UV lamp, such as a mercury arc lamp, in order to obtain gelling and subsequent curing. However, the UV content of sunlight is sufficient to obtain sufficient curing. Thereby, an additional assurance of the prepreg being sufficiently cured after repair is obtained.

The UV curable prepreg material can be used in temperatures ranging from at least at least -20 degrees Celsius to approximately 60 degrees Celsius, and the curing time is not influenced in this temperature range. Thereby, such repairs can be carried out all year round, and the repairs can be carried out without having to dismount the wind turbine blade 610 from the rotor.

The invention has been described with reference to a preferred embodiment. However, the scope of the invention is not limited to the illustrated embodiment, and alterations and modifications can be carried out without deviating from the scope of the invention. For instance may the UV curable prepreg also be applied to the inner surface of the shell body of the turbine blade.

### Reference numerals

- 2, 602: wind turbine
- 4, 604: tower
- 6, 606: nacelle
- 8, 608: hub
- 10, 610: blade
- 14, 614: blade tip
- 16: blade root
- 110, 210: wind turbine blade
- 120: first shell part
- 122: second shell part
- 124: first joint face
- 126: second joint face
- 130, 140,230,240,:
- 250, 330, 430, 530: UV curable prepreg material
- 431: prepreg layers
- 336, 436: UV protective film
- 337, 437: first side
- 338: second film
- 339, 439: second side
- 560: dispenser
- 570: roll
- 680: work platform
- 685: hoisting arrangement
- 690: worker

## Claims

1. A method of strengthening a wind turbine blade comprising a shell body comprising a fibre-reinforced polymer material by use of a UV curable, fibre-reinforced prepreg material having a first side and a second side, wherein the method comprises the steps of:
a) applying the UV curable, fibre-reinforced prepreg material to an area of application on an outer surface or inner surface of the wind turbine blade with the first side of the prepreg material facing the area of application, and
b) exposing the prepreg material to UV radiation for a predetermined amount of time so as to allow the prepreg to cure.

2. A method according to claim 1, wherein the second side of the prepreg material is covered by a removable, UV blocking film, and wherein the UV blocking film is removed prior to step b).

3. A method according to claim 1 or 2, wherein the area of application is prepared for adhesion prior to step a).

4. A method according to any of the preceding claims, wherein the UV curable prepreg material is applied at joint faces in the shell body.

5. A method according to any of the preceding claims, wherein the UV curable prepreg material is preformed, e.g. by vacuum forming, thermoforming or deep drawing, so as to fit to the area of application of the wind turbine blade.

6. A method according to claim 5, wherein the UV curable prepreg material is formed so as to constitute a leading edge reinforcement element.

7. A method according to claim 6, wherein the UV curable prepreg material is applied by use of a roll dispenser.

8. A method according to any of the preceding claims, wherein the UV curable prepreg is applied as a strip or strips on the surface of the wind turbine blade, the strips having a width in an interval of 2 cm to 20 cm, or 3 cm to 18 cm.

9. A method according to any of the preceding claims, wherein the UV curable prepreg is applied as a strip or strips on the surface of the wind turbine blade, the strips having a thickness in an interval of 1 mm to 4 cm, or 1 mm to 3 cm, or 1 mm to 2 cm.

10. A method according to any of the preceding claims, wherein the UV curable prepreg comprises a number of stacked layers with the width of the layers increasing from the first side to the second side.

11. A method according to any of the preceding claims, wherein the prepreg comprises a photo initiator absorbing light within a wavelength range from 250 nm to 425 nm.

12. A method of repairing a wind turbine blade according to any of the preceding claims.

13. A method according to claim 12, wherein the wind turbine blade is installed on the rotor of a wind turbine blade, and wherein the blade is positioned in a substantially vertical position with a tip end pointed towards the ground, and wherein a worker prior to step a) is hoisting down along the wind turbine blade from a point above the area of application.

14. A method according to any of the preceding claims, wherein step c) is carried out by use of a portable UV radiation source.

15. A wind turbine blade comprising a shell body comprising a fibre-reinforced polymer material and having an outer surface, the shell body further being provided with a reinforcement element on the outer surface of the blade, the reinforcement element comprising a UV cured prepreg.
